# EUROPEAN PATENT APPLICATION

(11) **EP 4 838 606 A1**
(43) Date of publication of application: **11.11.2026**
(21) Application number: 25855000.3
(22) Date of filing: 14.08.2025
(51) Int. Cl.: H01M 10/056, H01M 10/0585, H01M 10/052, H01M 10/0562

(54) **SOLID ELECTROLYTE FOR ALL-SOLID-STATE LITHIUM-ION SECONDARY BATTERY AND ALL-SOLID-STATE LITHIUM-ION SECONDARY BATTERY COMPRISING SAME**

(30) Priority: 14.08.2024 KR 20240109429; 13.08.2025 KR 20250112275
(71) Applicant: LG Energy Solution, Ltd., Seoul 07335 (KR)
(72) Inventor: LEE, Jieun, Daejeon 34122 (KR); KIM, Ji Young, Daejeon 34122 (KR); KIM, Youngbok, Daejeon 34122 (KR); KIM, Donghyeon, Daejeon 34122 (KR); LEE, Wonrak, Daejeon 34122 (KR)
(74) Representative: Goddar, Heinz J.
(86) International application number: PCT/KR2025/012345
(87) International publication number: WO 2026/038900

(57) **Abstract**

Disclosed are a solid electrolyte for an all-solid-state lithium-ion secondary battery and an all-solid-state lithium-ion secondary battery including the same, which can improve the formability of the solid electrolyte and the performance of the battery by incorporating two or more types of binders with different molecular weights into the solid electrolyte of the all-solid-state battery to reduce the porosity. The solid electrolyte for the all-solid-state lithium-ion secondary battery includes two or more types of binders with different molecular weights (Mw).

## Description

### [Technical Field]

The present application claims the benefits of priorities based on Korean Patent Application No. 10-2024-0109429 filed on August 14, 2024 and Korean Patent Application No. 10-2025-0112275 filed on August 13, 2025, all the contents of which are incorporated as part of this specification.

The present invention relates to a solid electrolyte applicable to an all-solid-state lithium-ion secondary battery and an all-solid-state lithium-ion secondary battery comprising the same, and more particularly, to a solid electrolyte for an all-solid-state lithium-ion secondary battery, which can improve the formability of the solid electrolyte and the performance of the battery by incorporating two or more types of binders with different molecular weights into the solid electrolyte of the all-solid-state battery to reduce the porosity, and an all-solid-state lithium-ion secondary battery comprising the same.

### [Background Art]

From the viewpoints of the capacity, safety, output, large-scale, and miniaturization of the battery, various batteries are being studied that can overcome the limitations of the lithium secondary battery that is currently being widely commercialized. Typically, a metal-air battery that has a very large theoretical capacity in terms of capacity compared to a lithium secondary battery, an all-solid-state battery that does not have an explosion hazard in terms of safety compared to a lithium secondary battery, a supercapacitor in terms of output, a Na-S battery or a redox flow battery (RFB) in terms of large size, a thin film battery in terms of miniaturization and the like are continuously being studied in academia and industry.

Among these, the all-solid-state battery refers to a battery that replaces the liquid electrolyte used in lithium secondary batteries with a solid one, and thus does not use flammable solvents, thereby eliminating the risk of fire or explosion caused by decomposition reactions in conventional electrolyte solutions and thus significantly improving safety. In addition, the all-solid-state battery can use lithium metal or lithium alloys as the negative electrode active material, thereby offering the advantage of dramatically improving the energy density relative to the mass and volume of the battery. Furthermore, the capacity density (capacity per unit weight) of lithium is approximately 10 times that of graphite, commonly used as a negative electrode active material. Therefore, when lithium is used as the negative electrode active material, it is possible to increase output while reducing the size of an all-solid-state battery.

As such a conventional all-solid-state battery, a battery is known that comprises a metal layer formed from a metal that forms an alloy with lithium as the negative electrode active material layer, and an interface layer of amorphous carbon on the negative electrode active material layer. Additionally, in the case of this type of all-solid-state battery, metallic lithium precipitates between the amorphous carbon interface layer and the negative electrode active material layer during charging, and this precipitated metallic lithium ionizes and migrates toward the positive electrode during discharging. However, when the all-solid-state battery, as described above, is repeatedly charged and discharged, there may be a problem that metallic lithium precipitated between the amorphous carbon interface layer and the negative electrode active material layer can ionize and dissolve, thereby creating voids that render the battery unusable.

In order to address these issues, an all-solid-state battery consisting of a negative electrode (i.e., lithium-free negative electrode) containing carbon material, excluding the lithium metal layer, has been developed in this field. This negative electrode of the all-solid-state battery does not contain lithium in the initial or fully discharged state. During overcharging, lithium ions migrating from the positive electrode form an alloy or compound between the negative electrode current collector and the solid electrolyte, which can act as the negative electrode active material (i.e., lithium metal is plated on the surface of the negative electrode current collector during charging).

The all-solid-state battery as described above is manufactured by interposing a solid electrolyte membrane between the positive and negative electrodes. Furthermore, since sulfide-based all-solid-state batteries require high-temperature and high-pressure molding processes (such as isostatic pressurization) after interposing the solid electrolyte membrane between the positive and negative electrodes, the solid electrolyte must have excellent formability. However, there is a problem that currently known sulfide-based solid electrolytes for all-solid-state batteries suffer from poor formability, which negatively impacts battery performance. Therefore, there is a need for methods to improve the formability of sulfide-based solid electrolytes for all-solid-state batteries.

### [Disclosure]

### [Technical Problem]

Therefore, it is an object of the present invention to provide a solid electrolyte for an all-solid-state lithium-ion secondary battery, which can improve the formability of the solid electrolyte and the performance of the battery by incorporating two or more types of binders with different molecular weights into the solid electrolyte of the all-solid-state battery to reduce the porosity, and an all-solid-state lithium-ion secondary battery comprising the same.

### [Technical Solution]

In order to achieve the above objects, the present invention provides a solid electrolyte for an all-solid-state lithium-ion secondary battery, comprising two or more types of binders with different molecular weights (Mw).

In addition, the present invention provides an all-solid-state lithium-ion secondary battery comprising a positive electrode; a negative electrode; and a solid electrolyte layer comprising the above-described solid electrolyte interposed therebetween.

### [Advantageous Effects]

According to the solid electrolyte for an all-solid-state lithium-ion secondary battery and an all-solid-state lithium-ion secondary battery comprising the same according to the present invention, it has the advantage of improving the formability of the solid electrolyte and the performance of the battery, by incorporating two or more types of binders with different molecular weights into the solid electrolyte of an all-solid-state battery to lower porosity.

### [Description of Drawings]

FIG. 1 is a cross-sectional schematic diagram illustrating the configuration of an all-solid-state lithium-ion secondary battery according to one embodiment of the present invention.
FIG. 2 is a cross-sectional schematic diagram illustrating the configuration of an all-solid-state lithium-ion secondary battery according to one embodiment of the present invention.
FIG. 3 is a graph illustrating the capacity retention rate depending on charging/discharging cycles of batteries according to Examples of the present invention and Comparative Examples.

### [Best Mode]

Hereinafter, the present invention will be described in detail.

The solid electrolyte for an all-solid-state lithium-ion secondary battery according to the present invention comprises two or more types of binders with different molecular weights.

The all-solid-state battery refers to a battery in which the liquid electrolyte used in the lithium secondary battery is replaced with a solid electrolyte. Consequently, since flammable solvents are not used, there is no risk of ignition or explosion due to decomposition reactions of conventional electrolyte solutions, significantly improving safety. This all-solid-state battery has the advantage of improving especially the low stability, energy density, and long-lifetime problems of liquid electrolytes comprised in lithium-ion batteries and the like.

The solid electrolyte of this all-solid-state battery can be largely classified into organic (polymer-based) solid electrolyte and inorganic solid electrolyte, and among them, the inorganic solid electrolyte can be divided into sulfide-based and oxide-based. In addition, the solid electrolyte for which technological development has been currently most advanced is a sulfide-based solid electrolyte, and its development has been progressed to the extent that the ionic conductivity reaches a level close to that of organic electrolyte solution. As such, since the sulfide-based solid electrolyte not only has a high ionic conductivity of 10⁻³ S/cm to 10⁻² S/cm among solid electrolytes, but also has excellent thermal stability and ductility, it has the advantage (Interfacial compatibility) of being advantageous in improving resistance by making good contact with the interface.

However, since the sulfide-based all-solid-state battery requires a high-temperature and high-pressure molding process (such as isostatic pressurization) after interposing a solid electrolyte membrane between the positive and negative electrodes, the formability of the solid electrolyte must be particularly excellent. However, conventional sulfide-based solid electrolytes for all-solid-state batteries suffer from poor formability, which negatively impacts on the performance of the batteries. Therefore, the present applicant has solved the existing problem by incorporating two or more types of binders with different molecular weights into a sulfide-based solid electrolyte, and intends to present a specific and practical solution below.

The solid electrolyte for an all-solid-state lithium-ion secondary battery is formed by drying an electrolyte slurry, and is typically interposed between a positive electrode and a negative electrode, but may also be included in an electrode (particularly, a positive electrode) if necessary. For example, when the solid electrolyte is also included in the positive electrode, the solid electrolyte may be applied to at least a portion of the surface of components constituting the positive electrode, such as the positive electrode active material.

The solid electrolyte may be amorphous, crystalline, or a mixture of amorphous and crystalline states.

In addition, the solid electrolyte may include at least one selected from among a sulfide-based solid electrolyte, a polymer-based solid electrolyte, and an oxide-based solid electrolyte, but it is preferable to include only the sulfide-based solid electrolyte.

More specifically, the solid electrolyte comprises a sulfide-based solid electrolyte and a binder.

The sulfide-based solid electrolyte contains sulfur (S) and has the ionic conductivity of a metal belonging to Group 1 or Group 2 of the periodic table, and may include Li-P-S-based glass or Li-P-S-based glass ceramic. Non-limiting examples of such sulfide-based solid electrolytes may comprise Li₂S-P₂S₅, Li₂S-P₂S₅-LiX(wherein X is a halogen element), Li₂S-P₂S₅-Li₂O, Li₂S-P₂S₅-Li₂O-LiI, Li₂S-SiS₂, Li₂S-SiS₂-LiI, Li₂S-SiS₂-LiBr, Li₂S-SiS₂-LiCl, Li₂S-SiS₂-B₂S₃-LiI, Li₂S-SiS₂-P₂S₅-LiI, Li₂S-B₂S₃, Li₂S-P₂S₅-ZₘSₙ(wherein m and n are positive numbers, and Z is one of Ge, Zn, or Ga), Li₂S-GeS₂, Li₂S-SiS₂-Li₃PO₄, Li₂S-SiS₂-LiₚMO_{q}(wherein p and q are positive numbers, and M is one of P, Si, Ge, B, Al, Ga or In), or combinations thereof. However, it is not limited thereto, and may be composed of materials that constitute a typical sulfide-based solid electrolyte. Meanwhile, when using a material containing Li₂S-P₂S₅, the mixing molar ratio of Li₂S and P₂S₅ may be selected in the range of, for example, Li₂S:P₂S₅ = 50:50 to 90:10.

However, in order for the solid electrolyte to exhibit optimal performance, it is preferable that the sulfide-based solid electrolyte comprises a compound having an argyrodite-type crystal structure, for example, a LPSCl (lithium phosphorus sulfur chloride)-based compound such as Li₆PS₅Cl.

In addition, the sulfide-based solid electrolyte may comprise a lithium salt, and the lithium salt may be represented as Li⁺X⁻ as an ionizable lithium salt. The anions of this lithium salt are not particularly limited, but examples thereof include F⁻, Cl⁻, Br⁻, I⁻, NO₃⁻, N(CN)₂⁻, BF₄⁻, ClO₄⁻, PF₆⁻, (CF₃)₂PF₄⁻, (CF₃)₃PF₃⁻, (CF₃)₄PF₂⁻, (CF₃)₅PF⁻, (CF₃)₆P⁻, CF₃SO₃⁻, CF₃CF₂SO₃⁻, (CF₃SO₂)₂N⁻, (FSO₂)₂N⁻_{,} CF₃CF₂(CF₃)₂CO⁻, (CF₃SO₂)₂CH⁻, (SF₅)₃C⁻, (CF₃SO₂)₃C⁻, CF₃(CF₂)₇SO₃⁻, CF₃CO₂⁻, CH₃CO₂⁻, SCN⁻, (CF₃CF₂SO₂)₂N⁻ and the like.

The binder included in the solid electrolyte for an all-solid-state lithium-ion secondary battery plays a central role in or assists in the adhesion between the solid electrolyte and the electrode.

As described above, the solid electrolyte contains two or more types of binders with different molecular weights. For example, the solid electrolyte may contain two types of binders with different molecular weights, i.e., a first binder and a second binder (note that the "molecular weight" of the binders described below all refer to the "weight average molecular weight (Mw)").

The ratio of the molecular weight (Mw) of the first binder to the molecular weight (Mw) of the second binder may be 1:30 to 70, preferably 1:40 to 60, and more preferably 1:45 to 55. If the ratio of the molecular weight (Mw) of the first binder to the molecular weight (Mw) of the second binder is outside of 1:30 to 70, it may be impossible to achieve the object of the present invention, or the effect may have reached its maximum and thus there may be no further benefit.

More specifically, one of the two types of binders (i.e., the first binder) may have a molecular weight of 3,000 to 50,000 g/mol, preferably 5,000 to 30,000 g/mol, more preferably 7,000 to 15,000 g/mol, and one other type of binder (i.e., the second binder) may have a molecular weight of 100,000 to 1,500,000 g/mol, preferably 250,000 to 900,000 g/mol, and more preferably 400,000 to 600,000 g/mol.

If either the first binder or the second binder does not satisfy the above-mentioned molecular weight, the formability of the solid electrolyte membrane may be reduced. In addition, even if the above molecular weight is satisfied, if only one type of binder is used instead of two types, problems such as deterioration of the mechanical properties or formability of the solid electrolyte membrane may occur.

More specifically, it is preferred that the first binder comprises a rubber-based compound having a molecular weight of 3,000 to 50,000 g/mol, preferably 5,000 to 30,000 g/mol, and more preferably 7,000 to 15,000 g/mol.

In addition, the first binder may further comprise one or more selected from the group consisting of acrylonitrile copolymers, acrylonitrile-styrene-butadiene copolymers, polyethylene, polypropylene, chlorosulfonated polyethylene, polyvinylpyrrolidone, cellulose acetate, cellulose acetate butyrate, polyamides, polyimides, polycarboxylates, and compounds exhibiting similar properties to these, as needed.

Examples of rubber-based compounds included in the first binder include butadiene-based rubbers such as butadiene rubber (BR), styrene butadiene rubber (SBR), acrylic styrene butadiene rubber (ASBR), acrylonitrile-butadiene rubber (ABR), nitrile butadiene rubber (NBR), and hydrogenated nitrile butadiene rubber (HNBR), acrylic rubber and fluorine-based rubber, and one or more of these may be included.

It is preferred that the second binder comprises a rubber-based compound having a molecular weight of 100,000 to 1,500,000 g/mol, preferably 250,000 to 900,000 g/mol, and more preferably 400,000 to 600,000 g/mol.

In addition, the second binder may further comprise one or more selected from the group consisting of acrylonitrile copolymers, acrylonitrile-styrene-butadiene copolymers, polyethylene, polypropylene, chlorosulfonated polyethylene, polyvinylpyrrolidone, cellulose acetate, cellulose acetate butyrate, polyamides, polyimides, polycarboxylates, and compounds exhibiting similar properties to these, as needed.

Examples of rubber-based compounds included in the second binder may comprise butadiene-based rubbers such as butadiene rubber (BR), styrene butadiene rubber (SBR), acrylic styrene butadiene rubber (ASBR), acrylonitrile-butadiene rubber (ABR), nitrile butadiene rubber (NBR), and hydrogenated nitrile butadiene rubber (HNBR), acrylic rubber and fluorine-based rubber, and one or more of these may be comprised.

In addition, the rubber-based compound included in the first binder and the rubber-based compound included in the second binder may be independently selected from the group consisting of butadiene-based rubber, acrylic rubber, fluorine-based rubber, and combinations thereof. That is, the rubber-based compound included in the first binder and the rubber-based compound included in the second binder may be the same or different.

However, it may be more preferable that the first binder comprises nitrile butadiene rubber having a molecular weight of 3,000 to 50,000 g/mol, preferably 5,000 to 30,000 g/mol, and more preferably 7,000 to 15,000 g/mol.

In addition, it may be more preferable that the second binder comprises nitrile butadiene rubber having a molecular weight of 100,000 to 1,500,000 g/mol, preferably 250,000 to 900,000 g/mol, and more preferably 400,000 to 600,000 g/mol.

In addition, the difference in molecular weight between the first binder and the second binder may be 200,000 to 1,000,000 g/mol, preferably 300,000 to 700,000 g/mol, and more preferably 400,000 to 600,000 g/mol. If the difference in molecular weight between the first binder and the second binder is less than 200,000 g/mol, the formability of the solid electrolyte membrane may be reduced. In addition, if the difference in molecular weight between the first binder and the second binder exceeds 1,000,000 g/mol, the molecular weight of one type of the binders may increase excessively, resulting in a problem of reduced solubility.

Meanwhile, the content ratio of the first binder and the second binder may be 5:95 to 30:70, preferably 10:90 to 20:80, and more preferably 10:90 to 15:85 in terms of weight ratio. If the amount of the first binder is less than 5 wt.% based on the total weight of the first binder and the second binder, the effect of improving formability may be reduced. In addition, if the amount of the first binder exceeds 30 wt.% based on the total weight of the first binder and the second binder, contact between binder particles is not maintained due to excessive input of the binder having a low molecular weight (i.e., the first binder), which may have a negative effect on the lifetime performance of the battery. The binder with the low molecular weight and the binder with the high molecular weight must be in uniform contact, and this is because, if the binder with the low molecular weight is added in excessive amounts, there is a problem that a large number of binder particles with the low molecular weight, which cannot come into contact with the binder particles with the high molecular weight, are generated. That is, if the low molecular weight binder is used alone, the pressure-formed solid electrolyte membrane lacks the strength to maintain its structure, thereby resulting in a spring-back phenomenon, slightly returning the membrane to the state before pressurization. Similarly, even when a large number of the binder particles with the low molecular weight are formed that do not contact the binder particles with the high molecular weight, the spring-back phenomenon is caused in the solid electrolyte membrane. Furthermore, if the amount of the first binder exceeds 30 wt.% based on the total weight of the first and second binders, the ionic conductivity of the solid electrolyte membrane increases, potentially leading to an increase in the resistance of the battery.

In this way, when two or more types of binders with different molecular weights are incorporated into the solid electrolyte, the pores within the solid electrolyte can be reduced, thereby increasing the formability of the solid electrolyte and the contact area with the electrode. That is, in other words, when the solid electrolyte comprises two or more types of binders with different molecular weights, binders with relatively small molecular weights are positioned between binders with relatively large molecular weights, which presents advantages such as improving the density of the solid electrolyte. Moreover, if isostatic pressurization is achieved in this state, the formability of the solid electrolyte and the contact area with the electrode can be maximized by lowering the porosity of the solid electrolyte to an excellent level. Consequently, the formability of the solid electrolyte and the performance of the battery can be improved compared to conventional cases.

Additionally, among the solid electrolytes, only the binder (i.e., the first binder) having a relatively small molecular weight is positioned alone at the interface side in contact with the electrode, thereby increasing the interfacial adhesion between the electrode and the solid electrolyte membrane. Accordingly, the solid electrolyte in this case may comprise a first binder layer comprising the first binder; and a second binder layer comprising the first binder and the second binder in a mixed state. Accordingly, when the solid electrolyte is interposed between the positive electrode and the negative electrode, the solid electrolyte may be composed of a 1a binder layer in contact with the positive electrode, a 1b binder layer in contact with the negative electrode, and a second binder layer interposed between the 1a binder layer and the 1b binder layer.

Meanwhile, during the manufacture of the solid electrolyte, a solvent may be incorporated into the electrolyte slurry. The solvent has a role of dissolving the first binder and the second binder, and includes a solvent having a dielectric constant exceeding 0 and less than 20, preferably 0.1 to 10, and more preferably 0.3 to 5. In particular, since the sulfide-based solid electrolyte has a characteristic of undergoing structural collapse when reacting with a polar organic solvent, the dielectric constant of the solvent must be less than 20.

More specifically, the electrolyte slurry may comprise one or more of the following solvents having a dielectric constant exceeding 0 and less than 20.

Examples of such solvents include butyrate-based compounds such as n-butyl butyrate, isobutyl butyrate, pentyl butyrate, hexyl butyrate, and heptyl butyrate; sulphone-based compounds such as ethylmethyl sulfone and tetramethylene sulfone; nitrile-based compounds such as acetonitrile; carbonate-based compounds such as propylene carbonate; γ-butyrolactone; toluene-based compounds; xylene-based compounds; anisole-based compounds; benzene-based compounds; methane-based hydrocarbon compounds with 6 or more carbon atoms, such as hexane, heptane, nonane, and decane; methane-based hydrocarbon compounds containing halogen elements, such as dibromomethane and dichloromethane; chloroform-based compounds; and acetate compounds such as benzyl acetate and octyl acetate.

The solvent may preferably comprise at least one of butyrate-based compounds, toluene-based compounds, xylene-based compounds, anisole-based compounds, and acetate-based compounds, and may more preferably comprise butyrate-based compounds as a base.

The content ratio of the sulfide-based solid electrolyte and the binder (comprising the first binder and the second binder) included in the above solid electrolyte may be 90:10 to 98:2, preferably 91:9 to 97:3, and more preferably 93:7 to 95:5, as a weight ratio.

If the amount of the binder is less than 2 wt.%, problems such as the electrolyte slurry not being dispersed may occur due to insufficient amount of the binder.

In addition, if the amount of the binder exceeds 10 wt.%, problems such as gelation of the electrolyte slurry may occur due to the excessive amount of the binder.

In addition, the solid electrolyte may further include one or more of a crosslinking monomer and an inorganic particle, if necessary.

The crosslinking monomer can form a polymer matrix by crosslinking the positive electrode and the electrolyte through photopolymerization or thermal polymerization reaction, and may be exemplified by at least one selected from among trimethylolpropane ethoxylate triacrylate, polyethyleneglycol diacrylate, triethyleneglycol diacrylate, bisphenol A ethoxylate dimethacrylate, derivatives thereof, and mixtures thereof.

The inorganic particles can be evenly dispersed within the solid electrolyte and used to improve the mechanical strength of the solid electrolyte, and may be exemplified by at least one selected from among alumina (Al₂O₃), silicon dioxide (SiO₂), titanium dioxide (TiO₂), barium titanate (BaTiO₃), lithium oxide (Li₂O), lithium fluoride (LiF), lithium hydroxide (LiOH), lithium nitride (Li₃N), barium oxide (BaO), sodium oxide (Na₂O), lithium carbonate (Li₂CO₃), calcium carbonate (CaCO₃), lithium aluminate (LiAlO₂), strontium titanate (SrTiO₃), tin oxide (SnO₂), cerium oxide (CeO₂), magnesium oxide (MgO), nickel oxide (NiO), calcium oxide (CaO), zinc oxide (ZnO), zirconium dioxide (ZrO₂), silicon carbide (SiC), derivatives thereof, and mixtures thereof.

Here, a method for manufacturing the solid electrolyte for an all-solid-state lithium-ion secondary battery is briefly described. The solid electrolyte for an all-solid-state lithium-ion secondary battery according to one embodiment of the present invention can be prepared through the steps of (a) mixing two or more types of binders with different molecular weights to prepare a binder solution, (b) mixing the prepared binder solution with a sulfide-based solid electrolyte and a solvent to prepare an electrolyte slurry, and (c) drying the prepared electrolyte slurry. Additionally, according to one embodiment of the present invention, the solid electrolyte can be formed by applying, coating, and drying the prepared electrolyte slurry on a release film. Additionally, according to another embodiment of the present invention, the solid electrolyte can be formed by applying, coating, and drying the prepared electrolyte slurry on an electrode.

Meanwhile, the solid electrolyte for an all-solid-state lithium-ion secondary battery as described above may be composed of multiple layers, and preferably may be composed of two layers.

That is, in this case, the solid electrolyte becomes an electrolyte complex, and therefore, the electrolyte complex may comprise two types of phase-separated solid electrolytes, and may have a layered structure formed by a first solid electrolyte placed on the positive electrode side; and a second solid electrolyte placed on the negative electrode side.

Each of the first solid electrolyte and the second solid electrolyte comprises the sulfide-based solid electrolyte and two or more types of binders with different molecular weights (Mw).

The sulfide-based solid electrolyte included in the first solid electrolyte and the sulfide-based solid electrolyte included in the second solid electrolyte each separately comprise the sulfide-based solid electrolyte described above, and their specific compositions may be the same or different within the relevant range.

Each of the binder included in the first solid electrolyte and the binder included in the second solid electrolyte comprises the binder described above, that is, two or more types of binders with different molecular weights (Mw), and the specific composition may be the same or different within the relevant range.

Additionally, among two or more types of binders with different molecular weights, it is preferable that the binder with a relatively small molecular weight be liquid at room temperature, while the binder with a relatively large molecular weight be solid at room temperature (however, when two types of binders are dissolved in an organic solvent, a liquid binder solution is produced).

In addition, each of the first solid electrolyte and the second solid electrolyte may further comprise one or more of the crosslinking monomer and inorganic particles described above, if necessary.

Next, an all-solid-state lithium-ion secondary battery comprising the solid electrolyte for all-solid-state lithium-ion secondary battery described above will be described.

The all-solid-state lithium-ion secondary battery comprises a positive electrode, a negative electrode and a solid electrolyte layer comprising the above-described solid electrolyte interposed therebetween, and is preferably a sulfide-based all-solid-state lithium-ion secondary battery.

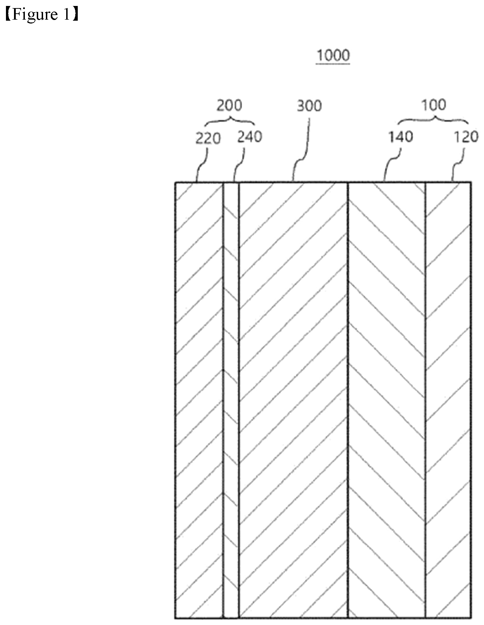

FIG. 1 is a cross-sectional schematic diagram illustrating the configuration of an all-solid-state lithium-ion secondary battery according to one embodiment of the present invention. The all-solid-state lithium-ion secondary battery 1000 according to one embodiment of the present invention is a so-called lithium-ion secondary battery that performs charging and discharging by lithium ions moving between the positive electrode 100 and the negative electrode 200. Specifically, this all-solid-state lithium-ion secondary battery 1000 comprises the positive electrode 100, the negative electrode 200, and a solid electrolyte layer 300 disposed between the positive electrode 100 and the negative electrode 200 and comprising the solid electrolyte, as shown in FIG. 1. Each of these will be described below.

### Positive electrode

As shown in FIG. 1, the positive electrode 100 comprises the positive electrode active material layer 140 and the positive electrode current collector 120 sequentially arranged so that the material layer 140 is in the direction toward the negative electrode 200. The positive electrode current collector 120 may have a plate shape or a foil shape. The positive electrode current collector 120 may be, for example, one type of metal selected from among indium, copper, magnesium, stainless steel, titanium, iron, cobalt, nickel, zinc, aluminum, germanium, and lithium, or an alloy of two or more types of these metals.

The positive electrode active material layer 140 can reversibly intercalate and de-intercalate lithium ions. In addition, the positive electrode active material layer 140 comprises a positive electrode active material and may further comprise a solid electrolyte. The positive electrode active material may be a compound capable of intercalating/de-intercalating lithium. An example of the compound capable of intercalating/de-intercalating the lithium may be one represented by any one of LiₐA_{1-b}B'_{b}D'₂ (0.90≤a≤1.8, 0≤b≤0.5); LiₐE₁-_{b}B'_{b}O_{2-c}D'_{c} (0.90≤a≤1.8, 0≤b≤0.5, 0≤c≤0.05); LiE_{2-b}B'_{b}O_{4-c}D'_{c} (0≤b≤0.5, 0≤c≤0.05); LiₐNi_{1-b-c}Co_{b}B'_{c}D'_{α} (0.90≤a≤1.8, 0≤b≤0.5, 0≤c≤0.05, 0<α≤2); LiₐNi_{1-b-c}Co_{b}B'_{c}O_{2-α}F'_{α} (0.90≤a≤1.8, 0≤b≤0.5, 0≤c≤0.05, 0<α<2); LiₐNi_{1-b-c}Mn_{b}B'_{c}D'_{α} (0.90≤a≤1.8, 0≤b≤0.5, 0≤c≤0.05, 0<α≤2); LiₐNi_{1-b-c}Mn_{b}B'_{c}O_{2-α}F'_{α} (0.90≤a≤1.8, 0≤b≤0.5, 0≤c≤0.05, 0<α<2); LiₐNi_{b}E_{c}G_{d}O₂ (0.90≤a≤1.8, 0≤b≤0.9, 0≤c≤0.5, 0.001≤d≤ 0.1); LiₐNi_{b}Co_{c}Mn_{d}GₑO₂ (0.90≤a≤1.8, 0≤b≤0.9, 0≤c≤0.5, 0≤d≤0.5, 0.001≤e≤0.1); LiₐNiG_{b}O₂ (0.90≤a≤1.8, 0.001≤b≤0.1); LiₐCoG_{b}O₂ (0.90≤a≤1.8, 0.001≤b≤0.1); LiₐMnG_{b}O₂ (0.90≤a≤1.8, 0.001≤b≤0.1); LiₐMn₂G_{b}O₄ (0.90≤a≤1.8, 0.001≤b≤0.1); QO₂; QS₂; LiQS₂; V₂O₅; LiV₂O₅; LiI'O₂; LiNiVO₄; Li_{(3-f)}J₂(PO₄)₃ (0≤f≤2); Li_{(3-f)}Fe₂(PO₄)₃ (0≤f≤2); LiFePO₄.

In the above Formulas, A is Ni, Co, Mn, or a combination thereof; B' is Al, Ni, Co, Mn, Cr, Fe, Mg, Sr, V, a rare earth element, or a combination thereof; D' is O, F, S, P, or a combination thereof; E is Co, Mn, or a combination thereof; F' is F, S, P, or a combination thereof; G is Al, Cr, Mn, Fe, Mg, La, Ce, Sr, V, or a combination thereof; Q is Ti, Mo, Mn, or a combination thereof; I' is Cr, V, Fe, Sc, Y, or a combination thereof; and J is V, Cr, Mn, Co, Ni, Cu, or a combination thereof.

Specific examples of the positive electrode active material may be lithium salts such as lithium cobaltate (LCO), lithium nickelate, lithium nickel cobaltate, lithium nickel cobalt aluminate (NCA), lithium nickel cobalt manganate (NCM), lithium manganate and lithium iron phosphate, and lithium sulfide. The positive electrode active material layer 140 may comprise only one or also two or more selected from among these compounds as a positive electrode active material.

The positive electrode active material may comprise a lithium salt of a transition metal oxide having a layered rock salt-type structure among the lithium salts described above. Here, the layered rock salt-type structure is a structure in which oxygen atomic layers and metal atomic layers are alternately and regularly arranged in the direction of the cubic rock salt-type structure, and as a result, each atomic layer forms a two-dimensional plane. In addition, the cubic rock salt-type structure means a sodium chloride-type structure which is one kind of crystal structure. For example, the cubic rock salt-type structure refers to a structure in which face-centered cubic lattices formed by each of the positive ions and the negative ions are displaced to be deviated from each other by 1/2 of the edge of the unit lattice.

The lithium salt of a transition metal oxide having such a layered rock salt-type structure may be, for example, a ternary lithium transition metal oxide such as LiNiₓCo_{y}Al_{z}O₂ (NCA) or LiNiₓCo_{y}Mn_{z}O₂ (NCM) (wherein, 0 < x < 1, 0 < y < 1, 0 < z < 1, x + y + z = 1). The positive electrode active material layer 140 may improve energy density and thermal stability of the all-solid-state lithium-ion secondary battery 1000 by comprising the lithium salt of the ternary transition metal oxide having such a layered rock salt-type structure as a positive electrode active material.

The shape of the positive electrode active material may be, for example, a particle shape such as a true spherical shape or an elliptical spherical shape. In addition, the particle diameter of the positive electrode active material is not particularly limited, and is possible if it is within the range applicable to the positive electrode active material of a typical all-solid-state lithium-ion secondary battery. In addition, the amount of the positive electrode active material in the positive electrode active material layer 140 also is not particularly limited, and is in a range applicable to the positive electrode of a typical all-solid-state lithium-ion secondary battery.

In addition, the compound dsecribed above having a coating layer on the surface of the compound may be used, or a mixture of the compound described above and the compound having the coating layer may be also used. The coating layer may comprise a coating element compound of an oxide or hydroxide of the coating element, an oxyhydroxide of the coating element, an oxycarbonate of the coating element, or a hydroxycarbonate of the coating element. The compound constituting these coating layers may be amorphous or crystalline. The coating element contained in the coating layer may be Mg, Al, Co, K, Na, Ca, Si, Ti, V, Sn, Ge, Ga, B, As, Zr, or a mixture thereof, and specific examples of the above coating layer may includ Li₂O-ZrO₂, etc. The coating layer forming process may use any coating method (e.g., spray coating, dipping, etc.), as long as the coating layer can be coated on the surface in a way that does not adversely affect the properties of the positive electrode active material by using these elements in the compound, and a detailed description thereof will be omitted since it is well understood by those engaged in the art.

The solid electrolyte that may be further contained in the positive electrode active material layer 140 may also be the same as or different from the solid electrolyte contained in the solid electrolyte layer 300 to be described later. In addition, the positive electrode active material layer 140 may be one obtained by mixing additives such as an electrically conductive agent, a binder, a filler, a dispersant, or an ion conductive auxiliary agent, as well as the above-described positive electrode active material and solid electrolyte. The electrically conductive agent may be, for example, graphite, carbon black, acetylene black, Ketjen black, carbon fiber, or metal powder. In addition, the binder is mixed with the active material and the electrically conductive material to bind each component and help the growth of the particles, and may be, for example, styrene-butadiene rubber (SBR), polytetrafluoroethylene, polyvinylidene fluoride, or polyethylene. In addition, the filler, the dispersant, the ion conductive auxiliary agent or the like may be a known material typically used for an electrode of an all-solid-state lithium-ion secondary battery. In addition, the positive electrode active material layer 140 may comprise the positive electrode active material, the electrically conductive material, and the binder in the form of granules.

### Negative electrode

Next, the negative electrode 200 comprises a negative electrode active material layer 240 positioned closer to the positive electrode 100 and in contact with the solid electrolyte layer 300, and a negative electrode current collector 220 positioned at the outermost side or the like, based on the stacking direction, facing the opposite side of the negative electrode active material layer 240 that does not contact the solid electrolyte layer 300. In addition, the negative electrode may not contain any separate lithium metal other than the lithium metal formed during charging (i.e., anode-free all-solid-state battery).

### Negative electrode active material layer

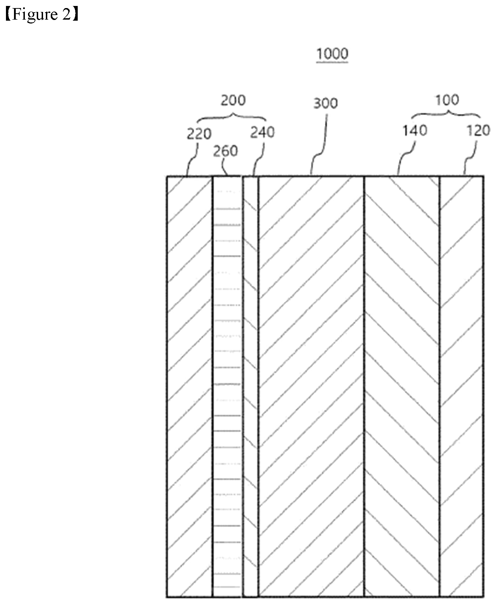

The negative electrode active material layer 240 may include one or more types of negative electrode active materials capable of forming an alloy or compound with lithium. In the initial state or the state after complete discharging, lithium may not be contained between the negative electrode current collector 220, the negative electrode active material layer 240, or the negative electrode active material layer 240 and the solid electrolyte layer 300. FIG. 2 is a cross-sectional schematic diagram illustrating the configuration of an all-solid-state lithium-ion secondary battery according to one embodiment of the present invention.

As will be described later, if the all-solid-state lithium-ion secondary battery 1000 according to an embodiment is overcharged, the negative electrode active material contained in the negative electrode active material layer 240 and lithium ions that have moved from the positive electrode 100 form an alloy or a compound, and the metal layer 260 containing lithium as a main component may be formed (precipitated) on the negative electrode 200, as shown in FIG. 2. The metal layer 260 may be precipitated and formed between the negative electrode current collector 220 and the negative electrode active material layer 240, in the negative electrode active material layer 240 or both. If the metal layer 260 is disposed between the negative electrode current collector 220 and the negative electrode active material layer 240, the metal layer 260 may be disposed closer to the negative electrode current collector layer 220 than the negative electrode active material layer 240.

The negative electrode active material layer 240 according to one embodiment of the present invention may comprise one or more lithiophilic materials selected from the group consisting of silver (Ag), gold (Au), platinum (Pt), zinc (Zn), silicon (Si), magnesium (Mg), copper oxide (CuO), zinc oxide (ZnO), cobalt oxide (CoO), manganese monoxide (MnO), silicon dioxide (SiO₂), titanium dioxide (TiO₂), alumina (Al₂O₃), zinc peroxide (ZnO₂), and lithium fluoride (LiF). In addition, among these, it may be more desirable to apply silver (Ag) as a lithiophilic material. However, it is not limited to this, and any lithiophilic material with similar properties or characteristics may be applied without special restrictions.

Accordingly, the metal layer (260) formed during overcharging may comprise a Li (lithiophilic material) alloy including a γ1 phase, a βLi phase, or a combination thereof in which the lithiophilic material is solid-dissolved in lithium. Therefore, during discharging, only Li is dissolved in the Li (lithiophilic material) alloy constituting the metal layer 260 and solid-dissolved lithiophilic material remains, thereby suppressing the occurrence of voids. In this case, the content of lithiophilic material in the precipitated Li-lithiophilic material solid solution may be 60 wt.% or less. If the amount is within such a range, it is possible to effectively suppress a decrease in the average discharging potential due to the influence of lithiophilic material. On the other hand, if the amount of lithiophilic material in the precipitated Li-lithiophilic material solid solution is too small, the amount of lithiophilic material remaining during discharging is decreased, and the generation of voids may not be sufficiently suppressed. For this reason, the amount of lithiophilic material in the precipitated Li-lithiophilic material solid solution may be 20 wt.% or more, for example, 40 wt.% or more.

In one embodiment of the present invention, the lithiophilic material does not necessarily need to be uniformly present in the negative electrode active material layer 240, and may be localized toward the negative electrode current collector 220 within the negative electrode active material layer 240. In this case, lithium ions may react with the lithiophilic material localized layer within the negative electrode active material layer 240 that has reached the vicinity of the negative electrode current collector 220, thereby forming a Li (lithiophilic material) alloy as a metal layer 260.

If the amount of the lithiophilic material contained in the negative electrode active material layer 240 is excessively low, it may be difficult to suppress the occurrence of pores because the lithiophilic material remaining during discharging is also decreased. Therefore, the negative electrode active material layer 240 may contain 10 wt.% or more, preferably 20 wt.% or more of the lithiophilic material in the initial state before charging/discharging, based on a total of 100 wt.% of the negative electrode active material contained in the negative electrode active material layer 240. Meanwhile, in terms of the relationship between the reaction potentials of the lithiophilic material and Li, an increase in the lithiophilic material can lower the average discharging potential, thereby reducing the energy density of the battery. Therefore, from the perspective of high energy density, the upper limit of the amount of the lithiophilic material may be preferably 50 wt.% or less, based on a total of 100 wt.% of the negative electrode active material contained in the negative electrode active material layer 240.

In addition, in the negative electrode active material layer 240, if the amount of the lithiophilic material per unit area is excessively low when viewed in the stacking direction of the negative electrode 200, the lithiophilic material remaining during discharging may be also decreased, thereby making it difficult to suppress the occurrence of pores. Accordingly, the amount of the lithiophilic material per unit area in the negative electrode active material layer 240 may be 0.05 mg/cm² or more, and preferably 0.10 mg/cm² or more. Meanwhile, if the amount of the lithiophilic material per unit area is too high, the average discharging potential may be decreased, thereby lowering the energy density of the battery. Therefore, the upper limit of the content of lithiophilic material per unit area may be 5 mg/cm² or less, and preferably 2 mg/cm² or less.

In addition, in the initial state where no charging or discharging is performed, the lithiophilic material contained in the negative electrode active material layer 240 may be in a particle phase or a film phase. When the lithiophilic material exists in a particle phase, the average particle diameter (d50, diameter length or average diameter) of the lithiophilic material may be 20 nm to 1 µm, but is not limited thereto.

Meanwhile, the negative electrode active material layer 240 may contain a carbon material as a negative electrode active material in addition to the lithiophilic material. As the carbon material contained in the negative electrode active material layer 240, an amorphous carbon can be preferably used. Specific examples of the amorphous carbon include amorphous carbon black (amorphous acetylene black, amorphous furnace black, amorphous Ketjen black), amorphous activated carbon, amorphous graphene, and combinations thereof. However, at the interface side that contacts the solid electrolyte layer 300 in the negative electrode active material layer 240, the interface of the negative electrode active material layer 240 that contacts the solid electrolyte layer 300 can be further flattened by placing a carbon material with a relatively small particle size. Based on a total of 100 wt.% of the negative electrode active material contained in the negative electrode active material layer 240, the negative electrode active material other than the lithiophilic material may be 50 wt.% or more, for example, 70 wt.% or more. The amount of the negative electrode active material other than the lithiophilic material can be measured using the same method as that used to measure the amount of the lithiophilic material.

In addition, the carbon material contained in the negative electrode active material layer 240 may contain oxygen. More specifically, the carbon material particles constituting the carbon material may contain 2 to 10 at% of oxygen. When the oxygen is contained in the range of 2 to 10 at%, the surface roughness of the negative electrode active material layer and the operating characteristics of the battery can be further improved. In one embodiment of the present invention, the oxygen may be present in a form contained in a functional group bonded to carbon material particles. In addition, the functional group may comprise at least one selected from the group consisting of a carboxyl group, a hydroxyl group, an ether group, an ester group, an aldehyde group, a carbonyl group, and an amide group.

The carbon material particles containing 2 to 10 at% of oxygen can be manufactured, for example, by a method of oxidizing the carbon material. For example, the carbon material can be treated with an acid, stirred and reacted at a temperature of 25 to 60°C to introduce oxygen functional groups to the surface of the carbon material. The type of the acid is not particularly limited, and any acid capable of introducing oxygen functional groups to the surface of the carbon material may be used. Examples of the acid may comprise sulfuric acid, nitric acid, or mixtures thereof, and an oxidizing agent such as potassium permanganate may also be used.

The amount of oxygen contained in the carbon material particles can be measured using a photoelectron spectroscopy (XPS or ESCA). For example, it can be measured using a K-Alpha (Thermo Fisher Scientific) device. In one embodiment of the present invention, the oxygen may be present on the surface of the carbon material particles. The surface does not mean only the outer surface of the carbon material particles, but also includes, for example, the inner surface of the pores if pores exist.

In addition, when the carbon material contains oxygen as described above, the negative electrode active material layer 240 may contain 2 to 10 at% of oxygen, 65 to 85 at% of carbon, and 0.5 to 5 at% of silver (Ag), and preferably may contain 2.5 to 5 at% of oxygen, 74 to 85 at% of carbon, and 0.5 to 3 at% of silver. In addition, the negative electrode active material layer 240 may further contain 5 to 25 at%, and preferably 10 to 20 at% of fluorine (F). In addition, the negative electrode active material layer 240 may further include 0.01 to 1 at%, and preferably 0.01 to 0.5 at%, of sulfur (S). In one embodiment of the present invention, the negative electrode active material layer 240 may include 2 to 10 at% of oxygen, 65 to 85 at% of carbon, 0.5 to 5 at% of silver, and 5 to 25 at% of fluorine, preferably 2.5 to 5 at% of oxygen, 74 to 85 at% of carbon, 0.5 to 3 at% of silver, and 10 to 20 at% of fluorine, and may further include sulfur. The atomic composition ratios can be measured using a photoelectron spectroscopy (XPS or ESCA). For example, the composition ratios can be measured using a Nexsa4 (Thermo Fisher Scientific) device.

Meanwhile, the negative electrode active material layer 240 may further comprise a binder for the purpose of stabilizing the negative electrode active material layer 240 on the negative electrode current collector 220. The binder may be, for example, a resin such as styrene butadiene rubber (SBR), polytetrafluoroethylene, polyvinylidene fluoride, or polyethylene. In addition, the negative electrode active material layer 240 may be appropriately blended with additives used in a typical all-solid-state battery, such as a filler, a dispersant, and an ion conductive auxiliary agent. Specific examples of the additives are the same as those described in the positive electrode section mentioned above.

The total thickness of the negative electrode active material layer 240 is not particularly limited and may be, for example, 1 to 100 µm. If the thickness of the negative electrode active material layer 240 is less than 1 µm, the performance of the all-solid-state battery may not be sufficient. In addition, if the thickness of the negative electrode active material layer 240 exceeds 100 µm, the resistance of the negative electrode active material layer 240 is increased, resulting in insufficient performance of the all-solid-state battery. For reference, by using the binder mentioned above, the thickness of the negative electrode active material layer 240 can be easily secured at an appropriate level.

### Negative electrode current collector

The negative electrode current collector 220 may be positioned at the outermost side based on the stacking direction, facing the opposite side of the negative electrode active material layer 240 that does not contact the solid electrolyte layer 300, as shown in FIG. 1. However, if the battery includes a structure of more than a bi-cell, it may be also located at a location other than the outermost one based on the stacking direction.

The negative electrode current collector 220 may have a plate shape or a foil shape. The negative electrode current collector 220 may include a material that does not react with lithium, i.e., does not form any alloy or compound with lithium. Examples of materials constituting the negative electrode current collector 220 include copper, aluminum, stainless steel, titanium, iron, cobalt, and nickel. In addition, the negative electrode current collector 220 may be composed of one of these metals, an alloy of two or more of these metals, or a cladding material.

### Initial charging capacity ratio

Meanwhile, in the all-solid-state lithium-ion secondary battery 1000 according to one embodiment, the initial charge capacity of the positive electrode active material layer 140 may be configured to be excessively large relative to the initial charge capacity of the negative electrode active material layer 240. As described below, the all-solid-state lithium-ion secondary battery 1000 according to one embodiment can be charged (i.e., overcharged) beyond the initial charge capacity of the negative electrode active material layer 240 and used. At the beginning of charging, lithium may be intercalated into the negative electrode active material layer 240. That is, the negative electrode active material may form an alloy or compound with lithium ions that have moved from the positive electrode 100. When charging is performed exceeding the initial charging capacity of the negative electrode active material layer 240, as shown in FIG. 2, lithium may be precipitated on the back of the negative electrode active material layer 240, that is, between the negative electrode current collector 220 and the negative electrode active material layer 240, and a metal layer 260 may be formed by the lithium. The metal layer 260 may be mainly composed of lithium in which a lithiophilic material is dissolved (i.e., a lithiophilic material-Li solid solution). This phenomenon may be caused by a material that forms an alloy or compound with the lithiophilic material contained in the negative electrode, for example, lithium. During discharging, lithium in the negative electrode active material layer 240 and the metal layer 260 can be ionized and move toward the positive electrode 100 while leaving the solid-dissolved lithiophilic material. Therefore, lithium can be used as the negative electrode active material in the all-solid-state lithium-ion secondary battery 1000. In addition, since the lithiophilic layer and the negative electrode active material layer 240 simultaneously coat the metal layer 260, they can function as a protective layer for the metal layer 260 and simultaneously suppress the precipitation and growth of dendritic metallic lithium. As a result, short-circuiting and capacity degradation of the all-solid-state lithium-ion secondary battery 1000 can be suppressed, and further, the characteristics of the all-solid-state lithium-ion secondary battery 1000 can be improved. Additionally, according to one embodiment, since the metal layer 260 is not formed in advance, there is also an advantage in that the manufacturing cost of the all-solid-state lithium-ion secondary battery 1000 can be reduced.

In the all-solid-state lithium-ion secondary battery 1000 according to one embodiment, it is preferable that the ratio ((b+c)/a) of the initial charging capacity of the positive electrode active material layer 140 to the initial charging capacity of the negative electrode active material layer 240 and the lithiophilic layer satisfies Equation below. [Equation 1] $0.01 < \left(b+c\right) / a < 0.5$ wherein, a is the initial charging capacity (mAh) of the positive electrode active material layer 140, b is the initial charging capacity (mAh) of the negative electrode active material layer 240, and c is the initial charging capacity (mAh) of the lithiophilic layer.

In this case, if the initial charge capacity ratio is 0.01 or less, the lithiophilic layer and the negative electrode active material layer 240 do not function sufficiently as a protective layer, so that the characteristics of the all-solid-state lithium-ion secondary battery 1000 may be deteriorated. For example, when the thickness of the lithiophilic layer and the negative electrode active material layer 240 is very thin, the capacity ratio may become 0.01 or less. In this case, there is a concern that the lithiophilic layer and the negative electrode active material layer 240 may be collapsed due to repeated charging and discharging, and dendritic metallic lithium may be precipitated and grown. As a result, the characteristics of the all-solid-state lithium-ion secondary battery 1000 may be deteriorated. Meanwhile, if the initial charge capacity ratio is 0.5 or more, the capacity of the battery may be decreased because the amount of lithium precipitation at the negative electrode is decreased.

### Manufacturing method of all-solid-state lithium-ion secondary battery

Next, a method of manufacturing the all-solid-state lithium-ion secondary battery 1000 will be described. The all-solid-state lithium-ion secondary battery 1000 according to an embodiment can be obtained by manufacturing the positive electrode 100, the negative electrode 200, and the solid electrolyte layer 300, respectively, and then stacking the above layers. In addition, the all-solid-state lithium-ion secondary battery 1000 according to another embodiment may also be manufactured by forming a solid electrolyte on one surface of the positive electrode 100 or the negative electrode 200 and then laminating the remaining electrode. In addition, the all-solid-state lithium-ion secondary battery 1000 according to another embodiment may also be manufactured by forming a first solid electrolyte on one surface of the positive electrode 100, and separately forming a second solid electrolyte on one surface of the negative electrode 200, and then laminating the first solid electrolyte and the second solid electrolyte so that they face each other.

In the positive electrode manufacturing process, first, a material constituting the positive electrode active material layer 140 (a positive electrode active material, a binder, etc.) is added to a non-polar solvent to prepare a slurry (or paste), and the prepared slurry is applied onto the positive electrode current collector 120, and then dried to obtain a laminate. Next, the laminate is pressurized using, for example, hydrostatic pressure to manufacture a positive electrode 100. In this case, the pressing process may be omitted.

Next, in the negative electrode manufacturing process, a material constituting the negative electrode active material layer 240 (a carbon material, a negative electrode active material comprising a lithiophilic material, a binder, etc.) is added to a polar solvent or a non-polar solvent to prepare a slurry (or a paste), and the prepared slurry is applied onto a negative electrode current collector 220 whose surface is treated with a lithiophilic material, and then dried to obtain a laminate (However, it is also acceptable to construct only a negative electrode current collector whose surface is treated with a lithiophilic material, without a negative electrode active material layer). In this case, the process of surface-treating the negative electrode current collector with the lithiophilic material may be performed by a method selected from the group consisting of an atomic layer deposition method, a sputtering method, and a plasma method. Subsequently, the laminate can be pressurized, for example, using hydrostatic pressure, to manufacture a negative electrode 200. In this case, the pressing process may be omitted. In addition, the method of applying the slurry onto the negative electrode current collector 220 is not particularly limited, and for example, screen printing, metal mask printing, electrostatic painting, dip coating, spray coating, roll coating, doctor blade, gravure coating, etc. can be used.

In a state where the solid electrolyte layer 300 is interposed between the positive electrode 100 and the negative electrode 200 manufactured in this manner, by pressurizing it, for example, using hydrostatic pressure, an all-solid-state lithium-ion secondary battery 1000 according to one embodiment can be manufactured.

The all-solid-state lithium-ion secondary battery 1000 of the present invention can be manufactured as a unit cell having a structure of positive electrode/solid electrolyte layer/negative electrode, a bi-cell having a structure of positive electrode/solid electrolyte layer/negative electrode/solid electrolyte layer/positive electrode, or a laminated battery structure in which the structure of the unit cells is repeated. In addition, the all-solid-state lithium-ion secondary battery according to the present invention can be utilized as a semi-solid battery comprising a liquid electrolyte if necessary, and in this case, a separate polymer separator can be further included.

The shape of the all-solid-state lithium-ion secondary battery 1000 of the present invention is not particularly limited, and for example, may be exemplified as a coin type, a button type, a sheet type, a stacked type, a cylindrical shape, a flat type, a horn type, etc. Additionally, it can be applied to large batteries used in electric vehicles, etc. For example, the all-solid-state lithium-ion secondary battery 1000 may also be used in a hybrid vehicle such as a plug-in hybrid electric vehicle (PHEV). In addition, it can be used in fields requiring a large amount of power storage. For example, it may be used for an electric bicycle or a power tool.

Hereinafter, preferred examples are presented to help understand the present invention, but the following examples are only illustrative of the present invention, and it is obvious to those skilled in the art that various changes and modifications are possible within the scope and technical idea of the present invention, and it is also natural that such changes and modifications fall within the scope of the appended claims.

### [Example 1] Manufacturing of all-solid-state lithium-ion secondary battery

80 g of lithium transition metal oxide, 6.5 g of carbon black, 9.83 g of nitrile butadiene rubber (binder), and 8.17 g of butyl butyrate (solvent) were placed in a THINKY mixer container and mixed 12 times at 2,000 rpm for 3 minutes each to prepare a positive electrode slurry. Then, using a spray coating method, the prepared positive electrode slurry was applied to the surface of a positive electrode current collector (aluminum foil), vacuum-dried at 100°C for 10 hours, and then pressurized using hydrostatic pressure to prepare a positive electrode.

6.5 g of carbon black, 9.83 g of PVdF binder (solid content 6%), and 8.17 g of NMP solution were placed in a THINKY mixer container and mixed 12 times at 2,000 rpm for 3 minutes each to prepare a negative electrode active material slurry. Subsequently, using a spray coating method, the prepared negative electrode active material slurry was applied to the surface of a negative electrode current collector (SUS foil), vacuum-dried at 100°C for 10 hours, and then pressurized using hydrostatic pressure to prepare a negative electrode.

Separately, a binder solution was prepared by mixing and dissolving butadiene rubber (liquid at room temperature) having a molecular weight (Mw) of 10,000 g/mol and butadiene rubber (solid at room temperature) having a molecular weight (Mw) of 500,000 g/mol in an organic solvent (n-butyl butyrate) at a weight ratio of 10:90. Then, 0.3 g of the binder solution, 10 g of sulfide-based solid electrolyte (Li₆PS₅Cl), and 10.3 g of butyl butyrate (solvent) were mixed so that the solid content becomes 35 to 55 wt.%, placed in a THINKY mixer container, and mixed 12 times at 2,000 rpm for 3 minutes each to prepare an electrolyte slurry. Next, the prepared electrolyte slurry was applied onto a release film using a bar coater and then vacuum-dried at 70°C for 5 hours.

Finally, the dried and manufactured solid electrolyte was separated from the release film and interposed between the manufactured negative electrode and positive electrode. This laminate was covered with a pouch made of polypropylene, sealed, and isostatically pressurized for 30 minutes to manufacture an all-solid-state battery in which the negative electrode/solid electrolyte/positive electrode were sequentially laminated.

### [Example 2] Manufacturing of all-solid-state lithium-ion secondary battery

An all-solid-state battery was manufactured in the same manner as in the Example 1, except that the mixing ratio of butadiene rubber having a molecular weight (Mw) of 10,000 g/mol and butadiene rubber having a molecular weight (Mw) of 500,000 g/mol is changed from a weight ratio of 10:90 to a weight ratio of 20:80.

### [Example 3] Manufacturing of all-solid-state lithium-ion secondary battery

An all-solid-state battery was manufactured in the same manner as in the Example 1, except that the mixing ratio of butadiene rubber having a molecular weight (Mw) of 10,000 g/mol and butadiene rubber having a molecular weight (Mw) of 500,000 g/mol is changed from a weight ratio of 10:90 to a weight ratio of 30:70.

### [Comparative Example 1] Manufacturing of all-solid-state lithium-ion secondary battery

An all-solid-state battery was manufactured in the same manner as in the Example 1, except that the binder solution used to prepare the electrolyte slurry contains only butadiene rubber having a molecular weight (Mw) of 500,000 g/mol as a binder.

### [Comparative Example 2] Manufacturing of all-solid-state lithium-ion secondary battery

An all-solid-state battery was manufactured in the same manner as in the Example 1, except that instead of butadiene rubber having a molecular weight (Mw) of 10,000 g/mol and butadiene rubber having a molecular weight (Mw) of 500,000 g/mol, butadiene rubber having a molecular weight (Mw) of 190,000 g/mol (solid at room temperature) and butadiene rubber having a molecular weight (Mw) of 340,000 g/mol (solid at room temperature) are added to the binder solution used to prepare the electrolyte slurry, in a weight ratio of 10:90.

### [Comparative Example 3] Manufacturing of all-solid-state lithium-ion secondary battery

An all-solid-state battery was manufactured in the same manner as in the Example 1, except that the mixing ratio of butadiene rubber having a molecular weight (Mw) of 10,000 g/mol and butadiene rubber having a molecular weight (Mw) of 500,000 g/mol is changed from a weight ratio of 10:90 to a weight ratio of 50:50.

### [Comparative Example 4] Manufacturing of all-solid-state lithium-ion secondary battery

An all-solid-state battery was manufactured in the same manner as in the Example 1, except that the mixing ratio of butadiene rubber having a molecular weight (Mw) of 10,000 g/mol and butadiene rubber having a molecular weight (Mw) of 500,000 g/mol is changed from a weight ratio of 10:90 to a weight ratio of 40:60.

### [Experimental Example 1] Measurement and evaluation of porosity of solid electrolyte

The porosity of each of the solid electrolytes manufactured in the Examples 1 to 3 and Comparative Examples 1 to 4 was measured before and after isostatic pressurization, and the results are shown in Table 1 below.

Meanwhile, the porosity was measured by measuring the mass and thickness of the solid electrolyte, and then sequentially calculating the volume and density (d1) using these values, and then using Equation 2 below. [Equation 2] $Porosity \left(%\right) = \left[1-\left(d1/d2\right)\right] \times 100$ wherein, d1 is the true density (mass/actual volume) calculated above, and d2 is the theoretical density (mass/theoretical volume).

In addition, the increase/reduction rate of the thickness in Table 1 below was measured using a precision thickness measuring device (Model name: TESA mu HITE, Manufacturer: TESA) and Equation 3 below. In addition, when the electrolyte slurry is applied and dried to manufacture a solid electrolyte, since all parts of the solid electrolyte are formed with a very uniform thickness, there is no specific part that should be measured, but measurements were taken at the center, which is generally measured because the deviation is the smallest. [Equation 3] $Increase / reduction rate of thickness \left(%\right) = \left[\left(T2-T1\right)/T1\right] \times 100$ wherein, T1 is the thickness of the solid electrolyte before isostatic pressurization, and T2 is the thickness of the isostatically pressurized solid electrolyte.

**[Table 1]**

| | Porosity (%) | | Porosity Reduction rate (%) | Increase/reduction rate of thickness (%) |
|---|---|---|---|---|
| | Before pressurization | After pressurization | | |
| Example 1 | 50.3 | 10.3 | 79.6 | -45.6 |
| Example 2 | 50.4 | 10.6 | 79.0 | -44.6 |
| Example 3 | 50.8 | 11.1 | 78.2 | -44.6 |
| Comparative Example 1 | 51.2 | 12.8 | 75.0 | -43.7 |
| Comparative Example 2 | 50.5 | 12.7 | 74.9 | -43.3 |
| Comparative Example 3 | 49.0 | 11.9 | 75.8 | -42.1 |
| Comparative Example 4 | 48.9 | 11.2 | 77.1 | -42.4 |

As can be seen in Table 1 above, the solid electrolytes of Examples 1 to 3, which contain two types of binders with different molecular weights, exhibited superior formability, resulting in a greater reduction in porosity (i.e., porosity reduction rate) after pressurization compared to Comparative Examples 1 to 4. Furthermore, a comparison and contrast of Examples 1 to 3 confirmed that the reduction in porosity is increased as the proportion of low-molecular-weight binders is decreased.

On the other hand, Comparative Example 1 did not use a low-molecular-weight binder, and thus its formability was inherently inferior. Consequently, the degree of the reduction in porosity after pressurization was small.

That is, as in Examples 1 through 3, binders with relatively small molecular weights must be positioned between binders with relatively large molecular weights to significantly reduce porosity and improve the density of the solid electrolyte. However, Comparative Example 1 exhibited inferior formability compared to Examples 1 through 3 because it did not use a binder with a low molecular weight.

For Comparative Example 2, although the solid electrolyte contains two types of binders with different molecular weights, the difference in molecular weights is not significant, resulting in poor formability. Consequently, the degree of the reduction in porosity after pressurization was small.

That is, it can be confirmed by comparing and contrasting Examples 1 to 3 with Comparative Example 2 that even if the solid electrolyte contains two types of binders with different molecular weights, if the difference in molecular weight is outside the scope of the present invention, the degree of the reduction in porosity will inevitably be small, as in Comparative Example 1. This is also because, while the reduction in porosity can only occur when binders with relatively low molecular weights are positioned between binders with relatively high molecular weights, the difference in molecular weight between the two binders is not significant, resulting in a minimal effect.

For Comparative Examples 3 and 4, although the solid electrolyte contained two types of binders with different molecular weights and the difference in molecular weight was set to be the same as in Example 1, the degree of the reduction in porosity after pressurization was small. This is because the mixing ratio of the low molecular weight binder and the high molecular weight binder is outside the scope of the present invention, and is because contact between binder particles is not maintained due to the excessive addition of a binder with a low molecular weight, that is, butadiene rubber (liquid) with a molecular weight (Mw) of 10,000 g/mol. That is, a binder with a low molecular weight and a binder with a high molecular weight must be in uniform contact. However, if a binder with a low molecular weight is added in excessive amounts, there is a problem that a large number of binder particles with a low molecular weight, which do not come into contact with binder particles with a high molecular weight, are generated. In addition, when a binder with a low molecular weight is used alone, the force to maintain the structure of the pressurized and formed solid electrolyte membrane is insufficient, resulting in a springback phenomenon in which the membrane slightly returns to the state before pressurization. In the case where a large number of binder particles with a low molecular weight do not come into contact with the binder particles with a high molecular weight as described above, the springback phenomenon of the solid electrolyte membrane also occurs.

In addition, the rate of increase or reduction in the thickness of the solid electrolyte due to isostatic pressurization is also affected by the degree of the reduction in porosity, and as shown in Table 1 above, as the rate of the reduction in porosity is increased, the degree of the reduction in thickness of the solid electrolyte also tends to increase.

### [Experimental Example 2] Evaluation of performance of all-solid-state battery

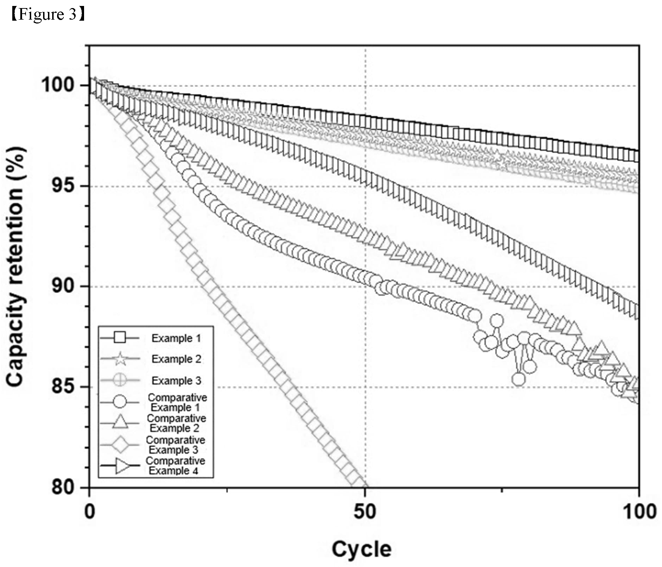

A driving pressure of 10 MPa was applied to each of the all-solid-state batteries manufactured in Examples 1 to 3 and Comparative Examples 1 to 4 using a jig, and charging and discharging were performed under the following conditions, while a constant driving pressure was applied, to evaluate the capacity retention rate depending on the charging and discharging cycle, and the results are shown in FIG. 3.
- Charging/discharging conditions: Charge to 4.25 V in CC/CV mode and 0.33 C at an operating temperature of 60°C, discharge to 3.0 V with a constant current, and repeat charging/discharging 100 times.

As described above, the performance of the all-solid-state batteries manufactured in Examples 1 to 3 and Comparative Examples 1 to 4 was evaluated, and as a result, the batteries of Examples 1 to 3, which contained two types of binders with different molecular weights in the solid electrolyte, showed a high capacity retention rate exceeding 95% even after 100 charge/discharge cycles, as shown in FIG. 3. On the other hand, it can be confirmed that the battery of Comparative Example 1, which did not contain a binder with a low molecular weight in the solid electrolyte, and the battery of Comparative Example 2, which contained two types of binders with different molecular weights in the solid electrolyte but had a small difference in molecular weight, showed a rapid reduction in capacity retention rate from the initial charging/discharging time.

In addition, it can be confirmed that the battery of Comparative Example 3, which comprised two types of binders with different molecular weights with an appropriate difference in the solid electrolyte, but had a mixing ratio of the binder with a low molecular weight and the binder with a high molecular weight that was outside the scope of the present invention, showed the most rapid reduction in capacity retention rate from the initial charging/discharging time.

In addition, the battery of Comparative Example 4, which included two types of binders with different molecular weights with an appropriate difference in the solid electrolyte, but in which the mixing ratio of the binder with a low molecular weight and the binder with a high molecular weight was outside the scope of the present invention, showed better performance than the other Comparative Examples, but showed significantly lower performance than the batteries of Examples 1 to 3.

Therefore, it can be seen that even if the solid electrolyte contains only one type of binder, or the solid electrolyte contains two types of binders having different molecular weights, the molecular weight between the binders is not large, or even if the solid electrolyte contains two types of binders having different molecular weights with an appropriate difference, if the mixing ratio between the binders is outside the scope of the present invention, there is a limit to improving the rapid charging performance.

### [Description of Reference Numerals]

100: Positive electrode
120: Positive electrode current collector
140: Positive electrode active material layer
200: Negative electrode
220: Negative electrode current collector
240: Negative electrode active material layer
260: Metal layer
300: Solid electrolyte layer
1000: All-solid-state lithium-ion secondary battery

## Claims

1. A solid electrolyte for an all-solid-state lithium-ion secondary battery, comprising two or more types of binders with different molecular weights.

2. The solid electrolyte for an all-solid-state lithium-ion secondary battery according to claim 1, wherein the solid electrolyte contains a first binder and a second binder having different molecular weights (Mw), and the ratio of the molecular weight (Mw) of the first binder to the molecular weight (Mw) of the second binder is 1:30 to 70.

3. The solid electrolyte for an all-solid-state lithium-ion secondary battery according to claim 2, wherein the molecular weight (Mw) of the first binder is 3,000 to 50,000 g/mol, and the molecular weight (Mw) of the second binder is 100,000 to 1,500,000 g/mol.

4. The solid electrolyte for an all-solid-state lithium-ion secondary battery according to claim 2, wherein the difference in the molecular weight (Mw) between the first binder and the second binder is 200,000 to 1,000,000 g/mol.

5. The solid electrolyte for an all-solid-state lithium-ion secondary battery according to claim 2, wherein the first binder comprises a rubber-based compound having a molecular weight (Mw) of 3,000 to 50,000 g/mol, and the second binder comprises a rubber-based compound having a molecular weight (Mw) of 100,000 to 1,500,000 g/mol.

6. The solid electrolyte for an all-solid-state lithium-ion secondary battery according to claim 5, wherein the rubber-based compound included in the first binder and the rubber-based compound included in the second binder are independently selected from the group consisting of butadiene-based rubber, acrylic rubber, fluorine-based rubber, and combinations thereof.

7. The solid electrolyte for an all-solid-state lithium-ion secondary battery according to claim 2, wherein the content ratio of the first binder and the second binder is 5:95 to 30:70 in terms of weight ratio.

8. The solid electrolyte for an all-solid-state lithium-ion secondary battery according to claim 2, wherein the solid electrolyte comprises a first binder layer containing the first binder; and a second binder layer containing the first binder and the second binder in a mixed state.

9. The solid electrolyte for an all-solid-state lithium-ion secondary battery according to claim 1, wherein the solid electrolyte comprises a sulfide-based solid electrolyte and two or more types of binders with different molecular weights (Mw).

10. The solid electrolyte for an all-solid-state lithium-ion secondary battery according to claim 9, wherein the content ratio of the sulfide-based solid electrolyte to the two or more types of binders is 90:10 to 98:2 by weight.

11. The solid electrolyte for an all-solid-state lithium-ion secondary battery according to claim 1, wherein the solid electrolyte comprises two types of phase-separated solid electrolytes, including a first solid electrolyte disposed on the positive electrode side and a second solid electrolyte disposed on the negative electrode side that form a layered structure, and
each binder included in the first solid electrolyte and the second solid electrolyte comprises two or more types of binders with different molecular weights (Mw).

12. An all-solid-state lithium-ion secondary battery comprising a positive electrode; a negative electrode; and a solid electrolyte layer comprising the solid electrolyte of claim 1 interposed therebetween.

13. The all-solid-state lithium-ion secondary battery according to claim 12, wherein the negative electrode does not contain any separate lithium metal other than lithium metal formed when the battery is charged.

14. The all-solid-state lithium-ion secondary battery according to claim 12, wherein the all-solid-state lithium-ion secondary battery is a sulfide-based all-solid-state lithium-ion secondary battery.
